# FASCICULE DE BREVET EUROPEEN

(11) **EP 3 095 171 B1**
(45) Date de publication et mention de la délivrance du brevet: **18.04.2018**
(21) Numéro de dépôt: 15704050.2
(22) Date de dépôt: 14.01.2015
(51) Int. Cl.: H02J 7/14

(54) **PROCEDE DE COMMANDE D'UN MODULE ELECTRONIQUE DE PUISSANCE APTE A FONCTIONNER EN REDRESSEUR SYNCHRONE, DISPOSITIF DE COMMANDE CORRESPONDANT ET MACHINE ELECTRIQUE TOURNANTE DE VEHICULE ELECTRIQUE COMPRENANT UN TEL DISPOSITIF**
VERFAHREN ZUR STEUERUNG EINES ALS SYNCHRON GLEICHRICHTER EINSETZBAREN LEISTUNGSELEKTRONIKMODULS, ENTSPRECHENDE STEUERUNGSVORRICHTUNG SOWIE DIESE VORRICHTUNG ENTHALTENDE ROTIERENDE ELEKTRISCHE MASCHINE IN EINEM ELEKTRISCHEN FAHRZEUG
METHOD TO CONTROL AN ELECTRONIC POWER MODULE OPERABLE AS A SYNCHRONOUS RECTIFIER, CORRESPONDING CONTROL MODULE AND ROTATING ELECTRICAL MACHINE OF AN ELECTRICAL VEHICLE COMPRISING SAID CONTROL MODULE

(30) Priorité: 17.01.2014 FR 1450371
(43) Date de publication de la demande: 23.11.2016
(73) Titulaire: Valeo Equipements Electriques Moteur, 94046 Créteil Cedex (FR)
(72) Inventeur: LOUISE, Christophe, 94140 Alfortville (FR); BLONDEL, Gaël, 91860 Epinay-sous-Senart (FR); MALBRANQUE, Ronald, 94300 Vincennes (FR); KOBYLANSKI, Luc, 75014 Paris (FR); MASSON, Philippe, 91330 Yerres (FR); NGUYEN, The Dung, 77300 Fontainebleau (FR)
(74) Mandataire: Duprez, Richard
(86) Numéro de dépôt international: PCT/FR2015/050088
(87) Numéro de publication internationale: WO 2015/107297

(56) Documents cités:
- EP-A2- 0 740 394
- EP-A2- 1 369 988
- US-A1- 2003 075 997
- US-A1- 2011 204 856

## Description

### DOMAINE TECHNIQUE DE L'INVENTION.

La présente invention concerne un procédé de commande d'un module électronique de puissance apte à fonctionner en redresseur synchrone pour des applications aux machines électriques tournantes de types alternateurs, ou alterno-démarreurs, de véhicules automobiles.

L'invention concerne aussi un dispositif de commande correspondant, ainsi qu'une machine électrique tournante de véhicule automobile comprenant un tel dispositif et une mémoire électronique contenant un programme adapté.

### ARRIERE PLAN TECHNOLOGIQUE DE L'INVENTION.

Dans les véhicules automobiles à moteur thermique, l'énergie électrique nécessaire aux divers équipements de bord est de manière habituelle produite par une machine électrique tournante couplée mécaniquement au moteur thermique.

L'alternateur s'est substitué universellement sur les véhicules modernes aux génératrices qui fournissaient un courant continu.

Le courant alternatif polyphasé fourni par l'alternateur est donc redressé pour alimenter le réseau électrique de bord.

Les ponts redresseurs à diodes, bien connus de l'état de la technique, sont aussi le plus souvent remplacés de nos jours par des redresseurs synchrones à interrupteurs de type transistors MOSFET qui ne présentent pas la chute de tension non négligeable des diodes en basse tension.

Le rendement électrique de l'alternateur est donc amélioré.

De plus, les éléments de commutation à semi-conducteur du redresseur synchrone peuvent être commandés de sorte que ce module électronique de puissance constitue un onduleur permettant d'alimenter à partir du réseau électrique de bord la machine électrique qui fonctionne alors en moteur.

Ce moteur peut être avantageusement utilisé pour démarrer le moteur thermique du véhicule.

Une telle machine électrique réversible, ou alterno-démarreur, permet notamment aux constructeurs de véhicules automobiles d'équiper leurs modèles d'un système de démarrage/ arrêt automatique, tel que le système connu sous le terme anglo-saxon de « Stop and Go », toutefois avec des contraintes accrues en termes de performances par rapport à un alterno-démarreur standard.

De ce fait, dans sa demande de brevet FR2843842, la société VALEO EQUIPEMENTS ELECTRIQUES MOTEUR divulgue un dispositif de commande d'une machine électrique tournante permettant d'utiliser un alterno-démarreur standard en mode moteur pour des véhicules automobiles exigeant une augmentation de la puissance électrique installée, et un couple de démarrage plus élevé que celui pour lequel l'alterno-démarreur était initialement prévu.

Mais l'entité inventive a également constaté qu'un alterno-démarreur standard utilisé en mode alternateur (et d'ailleurs aussi, n'importe quel alternateur) présente une limitation du débit aux faibles vitesses de rotation (de l'amorçage jusqu'à 3000 tr/mn environ).

Cette limitation est due à la conception du stator qui est optimisé pour un débit prédéterminé à haute vitesse (6000 tr/mn environ).

Le document EP 0740394 décrit un système de génération de puissance pour un véhicule comprenant une première commande dite de courant en avance de phase et une deuxième commande dite de courant non en avance de phase.

Le document US 2011/0204856 décrit un alternateur pour un véhicule pouvant fonctionner suivant un premier mode dit mode synchrone et un deuxième mode dit de contrôle de phase.

Il existe donc un besoin pour améliorer le débit à faible vitesse d'un alterno-démarreur standard fonctionnant en générateur, ou d'un alternateur à redressement synchrone, tout en en conservant les mêmes performances à haute vitesse.

### DESCRIPTION GENERALE DE L'INVENTION.

La présente invention vise donc à satisfaire ce besoin.

Selon un premier aspect, l'invention concerne un procédé de commande d'un module électronique de puissance qui est apte à fonctionner en redresseur synchrone alimentant en courant continu un réseau électrique de bord d'un véhicule automobile à partir d'un courant alternatif polyphasé fourni par une machine électrique tournante polyphasée.

Conformément à l'invention, le procédé comporte la commande du module électrique de puissance par une première commande de mode de redressement synchrone ou par une seconde commande de mode pleine onde présentant un déphasage par rapport à une force électromotrice de la machine, en fonction de la valeur d'au moins un paramètre de fonctionnement de la machine électrique tournante polyphasée parmi la vitesse de rotation courante et la force électromotrice de la machine, la première commande étant sélectionnée lorsque ladite valeur est supérieure à une valeur prédéterminée et ladite seconde commande étant choisie dans le cas contraire, et un angle d'ouverture de la seconde commande étant fonction d'une valeur de consigne du courant continu. L'angle d'ouverture de la seconde commande peut, de plus, être fonction d'au moins une caractéristique électrique de la machine. Selon une caractéristique particulière du procédé, une transition entre les première et seconde commandes présente une plage d'hystérésis comprise entre une première valeur de paramètre de fonctionnement prédéterminée supérieure à ladite valeur prédéterminée, et une seconde valeur de paramètre de fonctionnement prédéterminée inférieure à ladite valeur prédéterminée.

Selon une autre caractéristique particulière du procédé, le déphasage est variable et est fonction, alternativement ou en combinaison quelconque, d'une intensité du courant continu, d'une valeur de consigne du courant continu, de la vitesse de rotation courante, d'une température de la machine et d'une tension électrique de bord.

Selon encore une autre caractéristique particulière du procédé, le déphasage et/ou l'angle d'ouverture de la seconde commande sont déterminés de manière à limiter le courant et/ou la tension sur le réseau de bord, la limitation étant effectuée en amplitude et/ou en durée.

Selon un second aspect, l'invention concerne un dispositif de commande d'un module électronique de puissance, le module électronique de puissance comprenant un pont redresseur comportant des éléments de commutation à semi-conducteur formant plusieurs bras destinés à être connectés aux enroulements statoriques d'un stator d'une machine électrique tournante polyphasée et alimentant en courant continu un réseau électrique de bord d'un véhicule automobile, et le module électronique de puissance étant apte à fonctionner en redresseur synchrone et adapté à la mise en oeuvre du procédé de commande selon l'invention décrit brièvement ci-dessus.

Conformément à l'invention, le dispositif comprend:
- des premiers moyens d'acquisition d'une vitesse de rotation de la machine;
- des moyens de construction d'une première commande de mode de redressement synchrone quand la valeur de paramètre de fonctionnement est supérieure à une valeur prédéterminée, et d'une seconde commande de mode pleine onde dans le cas contraire;
- des moyens de pilotage des éléments de commutation à semi-conducteur par les première et seconde commandes.

Selon une autre caractéristique, les moyens de construction du dispositif comprennent alternativement:
- au moins un capteur de position d'une position angulaire d'un rotor de la machine;
- au moins une spire de mesure de la force électromotrice agencée dans le stator;
- des moyens de mesure/estimation d'au moins un courant de phase de la machine ou du signe de celui-ci.

Selon encore une autre caractéristique, les moyens de construction du dispositif comprennent en outre, alternativement ou en combinaison quelconque:
- des deuxièmes moyens d'acquisition d'une intensité du courant continu;
- des troisièmes moyens d'acquisition d'une valeur de consigne du courant continu;
- des quatrièmes moyens d'acquisition d'une température de la machine;
- des cinquièmes moyens d'acquisition d'une tension de réseau électrique de bord du véhicule.

Selon encore un autre aspect, l'invention concerne une machine électrique tournante de véhicule automobile de type alternateur ou alterno-démarreur qui comporte un dispositif de commande d'un module électronique de puissance tel que décrit brièvement ci-dessus.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

Les **Figures 1a****,** **1b** **et** **1c** sont des schémas de principe du dispositif de commande d'un module électronique de puissance apte à fonctionner en redresseur synchrone, et de son agencement dans une machine électrique tournante triphasée connectée à un réseau électrique de bord dans des premier, deuxième et troisième modes de réalisation préférés de l'invention.
La **Figure 2** est une vue schématique d'un palier arrière d'une machine électrique tournante comportant un dispositif de commande selon l'invention.
La **Figure 3** montre des courbes de débit d'une machine électrique tournante connue de l'état de la technique, d'une machine idéale et d'une machine théorique selon l'invention.
La **Figure 4** est un organigramme illustrant le procédé de commande d'un module électronique de puissance apte à fonctionner en redresseur synchrone selon l'invention.
La **Figure 5** est un diagramme montrant une première commande de mode de redressement synchrone et une seconde commande de mode pleine onde selon l'invention.
La **Figure 6** montre une courbe de débit d'une machine électrique tournante standard et une courbe de débit d'une machine implémentant l'invention.

### DESCRIPTION DES MODES DE REALISATION PREFERES DE L'INVENTION.

Le type de machine électrique tournante 1 visée par l'invention est de préférence un alterno-démarreur polyphasé 1 alimenté à partir du réseau électrique de bord 2, quand il fonctionne en démarreur, ou fournissant de l'énergie électrique à ce réseau 2 quand il fonctionne en alternateur.

Il peut s'agir également d'un alternateur 1 comportant un module de puissance 3 à pont de transistors de puissance 4 de type MOSFET fonctionnant en redresseur synchrone.

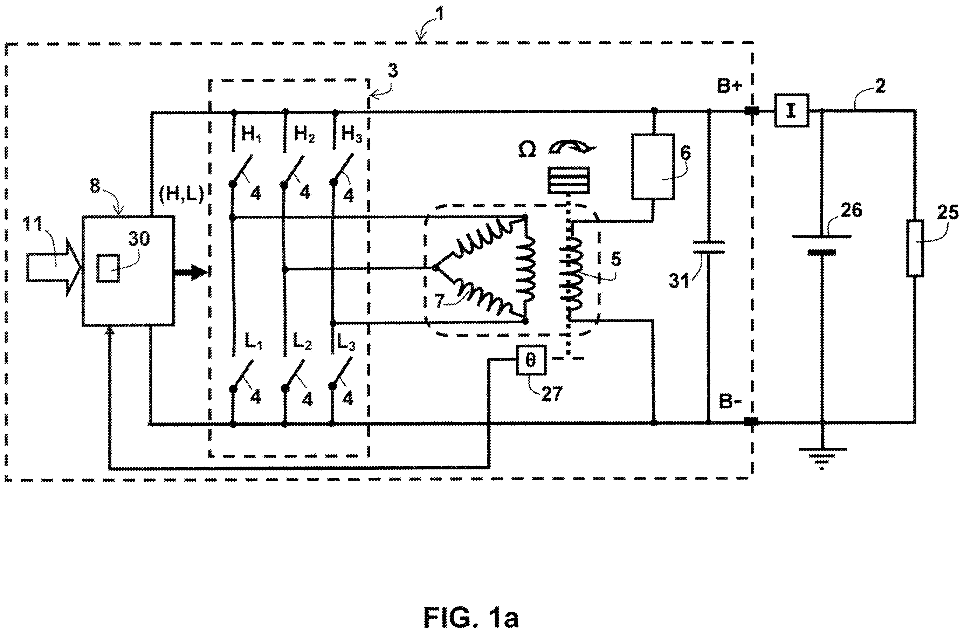

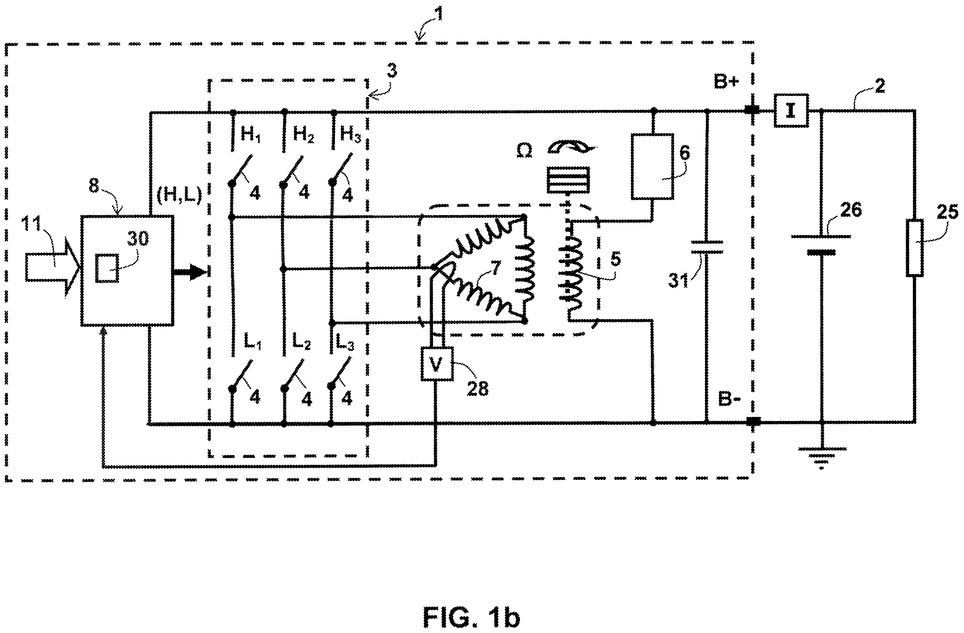

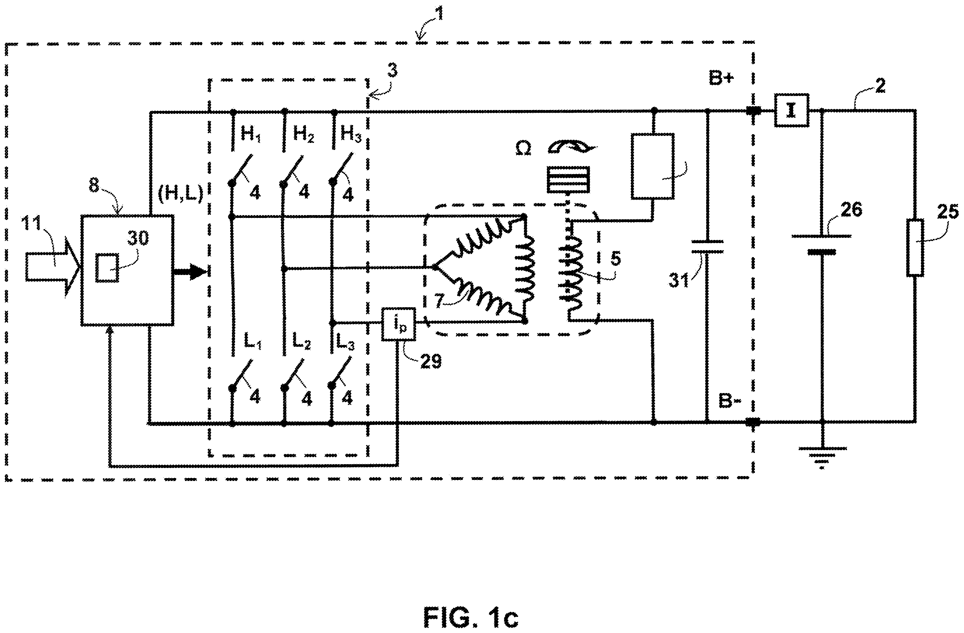

Les **Figures 1a****,** **1b** **et** **1c** représentent un exemple de machine électrique tournante 1 triphasée à excitation correspondant soit à l'alternateur d'un alterno-démarreur, soit à un alternateur conventionnel.

L'excitation est fournie par un rotor 5 dont l'enroulement rotorique 5 est parcouru par un courant d'excitation contrôlé de manière connue par un dispositif de régulation 6.

Les courants de phase induits dans le stator 7 par la rotation du rotor 5 entraîné par le moteur thermique du véhicule sont redressés par un pont redresseur 3 du module de puissance 3.

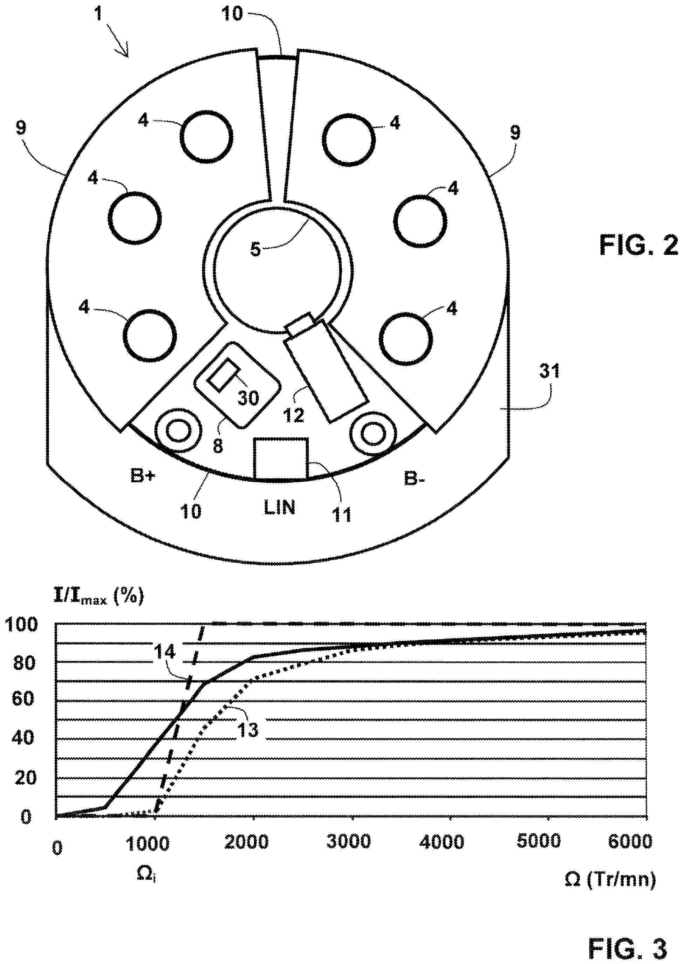

Ce pont redresseur 3 est généralement intégré sur un palier arrière de l'alternateur 1, comme le représente schématiquement la **Figure 2****.**

La **Figure 2** est une vue axiale simplifiée, du côté opposé à la poulie d'entraînement, d'un alternateur 1 comportant un dispositif de commande 8 selon l'invention du module de puissance 3 et montrant les éléments de commutation à semi-conducteur 4 du module électronique de puissance 3.

Les transistors MOSFET 4 sont montés sur des radiateurs 9 et connectés entre-eux par une grille de connexion 10 (« Lead frame » en anglais).

La grille de connexion 10 supporte également les bornes électriques B+, B-de liaison au réseau électrique de bord 2, un connecteur 11 à un réseau local d'interconnexion de type LIN, un porte-balais 12 pour l'alimentation électrique du rotor 5, et le dispositif de commande 8.

Ce dispositif de commande 8 est basé sur un ASIC (acronyme de "Application Specific Integrated Circuit" en anglais, c'est-à-dire "circuit intégré pour application spécifique") de type à la fois numérique et analogique, comprenant notamment une mémoire de type Flash, ou l'association d'un ASIC analogique et d'un FPGA (acronyme de "Field Progammable Gate Array" en anglais, désignant un "circuit intégré prédiffusé programmable").

Le pont redresseur 3 comporte trois bras H₁, L₁; H₂, L₂; H₃, L₃ comprenant chacun de manière connue des éléments de commutation à semi-conducteur 4 haut H₁, H₂, H₃ et bas L₁, L₂, L₃.

Dans un alternateur standard à pont redresseur 3 à transistors 4, le dispositif de commande 8 génère, indépendamment d'une vitesse de rotation courante Ω de l'alternateur, un vecteur de commande (H, L) des éléments de commutation à semi-conducteur 4 haut H₁, H₂, H₃ et bas L₁, L₂, L₃ de manière à commuter les enroulements statoriques 7 pour fournir un courant continu.

Un tel vecteur de commande conduit à un débit limité aux faibles vitesses de rotation courantes Ω, comme le montre une courbe de débit standard (en trait pointillé 13) de la **Figure 3****.**

Ceci n'est pas satisfaisant, car cette courbe de débit standard 13 est très éloignée d'une courbe de débit idéale (en trait tireté 14), qui présenterait rapidement un débit constant et maximum Iₘₐₓ dès la vitesse de ralenti Ωᵢ de l'ordre de 1000 tr/mn, souhaitée par les constructeurs d'automobiles.

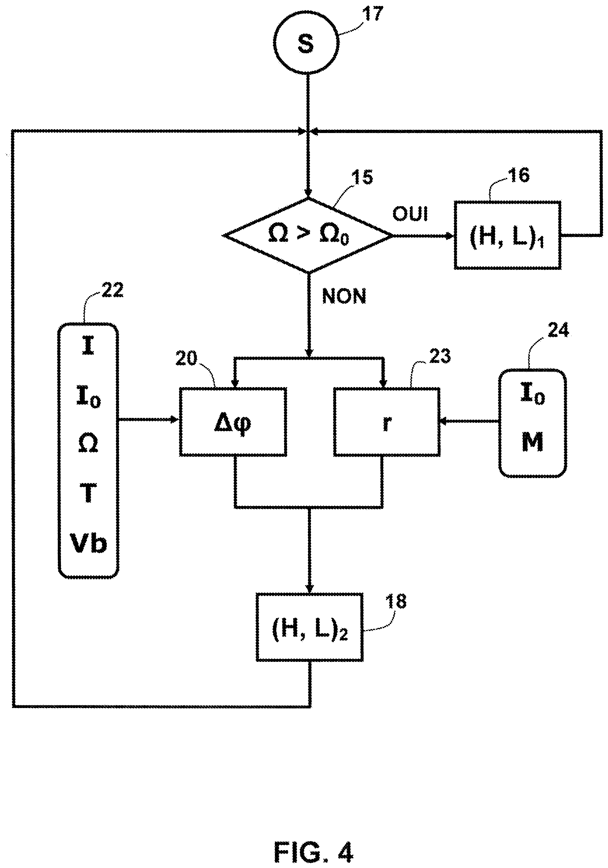

Le procédé de commande d'un module de puissance 3 apte à fonctionner en redresseur synchrone selon l'invention, représenté sur la **Figure 4****,** permet d'obtenir, comme le montre bien la **Figure 3****,** une courbe de débit théorique (en trait plein) proche de la courbe idéale 14.

Dans le procédé de commande selon l'invention, le pont redresseur 3 fonctionne comme le pont redresseur 3 à transistors 4 d'un alternateur standard si un test 15 détermine que la vitesse de rotation courante Ω est supérieure à une valeur prédéterminée Ω₀, de l'ordre de 3000 tr/ mn, c'est-à-dire que le dispositif de commande 8 construit une première commande 16 de mode de redressement synchrone (H,L)₁ identique au vecteur de commande (H,L) d'un alternateur standard.

Après le démarrage 17 de la machine électrique 1, et tant que le test 15 détermine que la vitesse de rotation courante Ω est inférieure ou égale à cette valeur prédéterminée Ω₀, dans le procédé de commande selon l'invention, le dispositif de commande 8 construit une seconde commande 18 de mode pleine onde (H,L)₂.

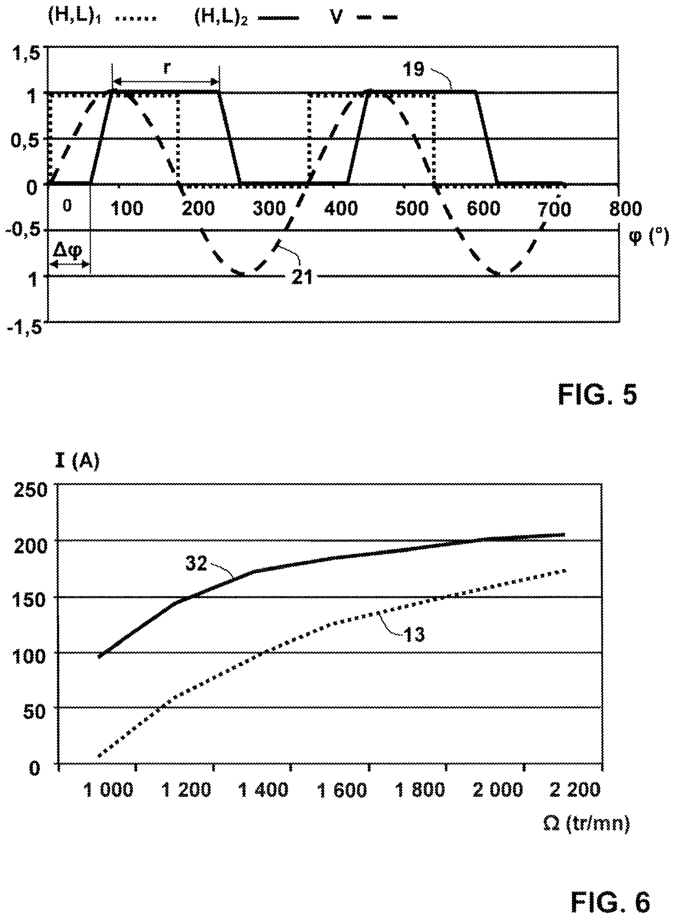

Comme le montre l'exemple de la **Figure 5****,** cette seconde commande 18 (en trait plein 19) est déphasée 20 d'un déphasage Δϕ par rapport à une force électromotrice V (représentée en trait tireté 21) de la machine électrique 1.

Ce déphasage Δϕ est ajusté en fonction 22 de la vitesse de rotation courante Ω et d'une température T de la machine électrique 1.

Il est ajusté 22 afin de maximiser l'intensité I du courant continu débité par la machine électrique 1.

Ce déphasage Δϕ peut aussi être modulé en fonction 22 d'une valeur de consigne I₀ de ce courant continu demandée par le réseau 2 et/ou une tension de réseau de bord Vb.

Dans le procédé de commande selon l'invention, on module 23 un angle d'ouverture r (180° ou moins) en fonction 24 de caractéristiques électriques M de la machine et/ou de la valeur de consigne I₀ du courant continu.

Le déphasage Δϕ et l'angle d'ouverture r sont des degrés de liberté supplémentaires qui sont utilisés pour améliorer la dynamique de la machine électrique 1 en cas d'un saut de charge 25 (appel ou délestage) sur le réseau 2.

Cette seconde commande 18 de mode pleine onde (H,L)₂ est donc intéressante à utiliser à fort courant afin de faire varier plus rapidement le courant continu I, comme par exemple pendant des phases de freinage récupératif ou de délestage de charge conduisant à une surtension sur le réseau de bord (phénomène désigné « load-dump » en anglais).

On notera que la seconde commande 18, du fait de la possibilité qu'elle donne d'ajuster le déphasage Δϕ et/ou l'angle d'ouverture r, peut être utilisée pour limiter le courant et/ou la tension du réseau de bord, par exemple, en cas de surtension sur le réseau due à un « load-dump » ou à un défaut de court-circuit dans le circuit d'excitation 5, 6 de la machine. Cette limitation du courant et/ou de la tension du réseau de bord peut être faite en amplitude et/ou dans la durée.

Dans le but d'éviter un phénomène de pompage, une plage d'hystérésis comprise entre une première vitesse de rotation prédéterminée Ω₁ et une seconde vitesse de rotation prédéterminée Q₂ autour de la valeur prédéterminée Ω₀ est en variante introduite dans une transition entre les première 16 et seconde 18 commandes.

Dans le cas d'un alterno-démarreur standard, la seconde commande 18 de mode pleine onde (H,L)₂ est réalisée de manière simple, puisqu'une commande similaire est déjà réalisée quand l'alterno-démarreur fonctionne en mode moteur (avec un déphasage Δϕ différent qui place la machine électrique 1 dans le cadran mode moteur).

Dans le cas d'un alternateur standard à pont redresseur 3 à transistors 4, l'implémentation du procédé de commande selon l'invention par une simple modification du firmware du dispositif de commande 8 n'est pas possible sans modifier le matériel.

Une première solution pour construire la seconde commande 18 de mode pleine onde (H,L)₂ consiste à ajouter une mesure de position angulaire θ du rotor 5 au moyen d'au moins un capteur de position 27 pour implémenter un premier mode de réalisation de l'invention représenté sur la **Figure 1a****.**

Une deuxième solution consiste à ajouter une spire de mesure 28 de la force électromotrice V de la machine électrique 1 pour implémenter un deuxième mode de réalisation de l'invention représenté sur la **Figure 1** **b.**

Une troisième solution consiste à ajouter des moyens de mesure 29 d'un courant de phase iₚ comme un capteur à effet Hall pour implémenter un troisième mode de réalisation de l'invention représenté sur la **Figure 1c****.**

En variante de cette troisième solution, une quatrième solution consiste à utiliser une image du courant de phase iₚ (tension drain-source des transistors 4 correspondants) ou le signe de ce courant de phase iₚ pour construire la seconde commande 18 (non représentée).

La température T prise en compte 22 par le procédé de commande selon l'invention peut être une mesure directe, indirecte ou une estimation de température à partir d'une ou plusieurs températures de la machine électrique 1 comme, de manière non exhaustive, la température du stator, la température des transistors 4 ou celle de la grille de connexion 10. Un capteur de température 30 est montré à la **Figure 2** et est utilisé pour l'obtention de cette température T.

Le procédé de commande selon l'invention du module de puissance 3 introduit des variations de courant sur le bus continu de la grille de connexion 10 nécessitant un filtrage. Pour ce faire, la machine électrique 1 selon l'invention comporte un bloc de condensateurs 31 intégré dans le module électronique de puissance 3 et connecté aux bornes B+, B- du bus continu. Le bloc de condensateurs 31 est intégré au niveau du palier arrière de la machine 1 comme le montre bien la **Figure 2****.**

La **Table I** et la **Figure 6** présentent des résultats d'essais menés par l'entité inventive sur un alterno-démarreur standard dont le firmware de l'ASIC a été modifié pour implémenter le procédé de commande selon l'invention.

La capacité du bloc de condensateurs 31 est de l'ordre de 8 mF.

La seconde commande 18 de mode pleine onde (H,L)₂ avec un angle d'ouverture r de 180° a été appliquée en mode alternateur entre 1000 tr/mn et 2200 tr/mn par pas de 200 tr/mn avec un courant d'excitation de 8 A.

Le déphasage Δϕ est variable et est commandé selon le point de fonctionnement de la machine 1. Les valeurs appliquées au déphasage Δϕ ont été déterminées pour maximiser l'intensité I du courant continu généré par la machine électrique 1.

**Table I**

| **Vitesse de rotation Ω (tr/mn)** | **1000** | **1200** | **1400** | **1600** | **1800** | **2000** | **2200** |
|---|---|---|---|---|---|---|---|
| **Débit redressement synchrone (A)** | 9 | 61 | 98 | 127 | 145 | 160 | 175 |
| **Débit pleine onde (A)** | 95 | 143 | 170 | 184 | 190 | 200 | 203 |
| **Déphasage Δϕ (**°**)** | 43,6 | 47,8 | 54,8 | 60,4 | 60,4 | 67,4 | 67,4 |

La **Figure 6** montre nettement que la courbe de débit mesurée (en trait plein 32) quand le dispositif de commande 8 fonctionne avec la seconde commande 18 de mode pleine onde (H,L)₂ est au dessus de la courbe de débit standard 13 (en trait pointillé), et se rapproche de la courbe de débit idéale 14 montrée sur la **Figure 3****,** aux faibles vitesses de rotation Ω comprises entre environ 1000 tr/mn et 2200 tr/mn.

Comme il va de soi, l'invention ne se limite pas aux seuls modes d'exécution préférentiels décrits ci-dessus.

Notamment, la machine électrique triphasée à excitation 1 décrite n'est donnée qu'à titre d'exemple. Une description similaire pourrait porter sur d'autres types de machines électriques 1 comme des machines 1 ayant un nombre de phases supérieur ou inférieur à six et des machines 1 à aimants permanents ou hybrides.

Les valeurs numériques des vitesses de rotation Ω citées ici ne sont données qu'à titre indicatif et varieront selon les modèles de machines électriques utilisées.

L'invention embrasse donc au contraire toutes les variantes possibles de réalisation qui resteraient dans le cadre défini par les revendications ci-après.

## Revendications

1. Procédé de commande d'un module électronique de puissance (3) apte à fonctionner en redresseur synchrone alimentant en courant continu (I) un réseau électrique de bord (2) d'un véhicule automobile à partir d'un courant alternatif polyphasé fourni par une machine électrique tournante polyphasée (1), comportant une commande du module électrique de puissance (3) par une première commande (16) de mode de redressement synchrone (H,L)₁ ou par une seconde commande (18) de mode pleine onde (H,L)₂ présentant un déphasage (Δϕ) par rapport à une force électromotrice (V) de ladite machine (1), en fonction de la valeur (Ω, V) d'au moins un paramètre de fonctionnement de la machine électrique tournante polyphasée (1) parmi la vitesse de rotation courante (Ω) et la force électromotrice (V) de ladite machine (1), ladite première commande (16) étant sélectionnée lorsque ladite valeur de paramètre de fonctionnement (Ω, V) est supérieure à une valeur prédéterminée (Ω₀) et ladite seconde commande (18) étant choisie dans le cas contraire, **caractérisé en ce qu'**un angle d'ouverture (r) de ladite seconde commande (18) est fonction d'une valeur de consigne (I₀) dudit courant continu.

2. Procédé de commande d'un module électronique de puissance (3) apte à fonctionner en redresseur synchrone selon la revendication 1, **caractérisé en ce qu'**une transition entre lesdites première et seconde commandes (16, 18) présente une plage d'hystérésis comprise entre une première valeur de paramètre de fonctionnement prédéterminée (Ω₁) supérieure à ladite valeur prédéterminée (Ω₀), et une seconde valeur de paramètre de fonctionnement prédéterminée (Ω₂) inférieure à ladite valeur prédéterminée (Ω₀).

3. Procédé de commande d'un module électronique de puissance (3) apte à fonctionner en redresseur synchrone selon l'une quelconque des revendications 1 ou 2 précédentes, **caractérisé en ce que** ledit déphasage (Δϕ) est variable et est fonction, alternativement ou en combinaison quelconque, d'une intensité (I) dudit courant continu, de la valeur de consigne dudit courant continu (I₀), de ladite vitesse de rotation courante (Ω), d'une température (T) de ladite machine (1) et d'une tension électrique de bord (Vb).

4. Procédé de commande d'un module électronique de puissance (3) apte à fonctionner en redresseur synchrone selon l'une quelconque des revendications 1 à 3 précédentes, **caractérisé en ce que** ledit déphasage (Δϕ) et/ou ledit angle d'ouverture (r) de ladite seconde commande (18) sont déterminés de manière à limiter le courant et/ou la tension sur ledit réseau de bord (2), ladite limitation étant effectuée en amplitude et/ou en durée.

5. Procédé de commande d'un module électronique de puissance (3) apte à fonctionner en redresseur synchrone selon l'une quelconque des revendications 1 à 4 précédentes, **caractérisé en ce que** l'angle d'ouverture (r) de ladite seconde commande (18) est fonction de la valeur de consigne (I₀) dudit courant continu et d'au moins une caractéristique électrique (M) de ladite machine.

6. Dispositif de commande (8) d'un module électronique de puissance (3) apte à fonctionner en redresseur synchrone, ledit module électronique de puissance (3) comprenant un pont redresseur comportant des éléments de commutation à semi-conducteur (4) formant plusieurs bras (H₁, L₁; H₂, L₂; H₃, L₃) destinés à être connectés aux enroulements statoriques (7) d'un stator d'une machine électrique tournante polyphasée (1) et alimentant en courant continu (I) un réseau électrique de bord (2) d'un véhicule automobile, **caractérisé en ce qu'**il comprend:
- des premiers moyens d'acquisition d'une vitesse de rotation (Ω) de ladite machine (1);
- des moyens de construction d'une première commande (16) de mode de redressement synchrone (H,L)₁ quand ladite valeur de paramètre de fonctionnement (Ω) est supérieure à une valeur prédéterminée (Ω₀), et d'une seconde commande (18) de mode pleine onde (H,L)₂ dans le cas contraire;
- des moyens de pilotage desdits éléments de commutation à semi-conducteur (4) par lesdites première et seconde commandes (16, 18),
le dispositif de commande (8) étant **caractérisé en ce qu'**il est adapté à la mise en oeuvre du procédé de commande selon l'une quelconque des revendications 1 à 5 précédentes.

7. Dispositif de commande (8) d'un module électronique de puissance (3) apte à fonctionner en redresseur synchrone selon la revendication 6, **caractérisé en ce que** lesdits moyens de construction comprennent alternativement:
- au moins un capteur de position (27) d'une position angulaire (θ) d'un rotor (5) de ladite machine;
- au moins une spire de mesure (28) de ladite force électromotrice (V) agencée dans ledit stator (7);
- des moyens de mesure/estimation (29) d'au moins un courant de phase (iₚ) de ladite machine (1) ou du signe de celui-ci.

8. Dispositif de commande (8) d'un module électronique de puissance (3) apte à fonctionner en redresseur synchrone selon la revendication 6 ou 7, **caractérisé en ce que** lesdits moyens de construction comprennent en outre, alternativement ou en combinaison quelconque:
- des deuxièmes moyens d'acquisition d'une intensité (I) dudit courant continu;
- des troisièmes moyens d'acquisition d'une valeur de consigne (I₀) dudit courant continu;
- des quatrièmes moyens d'acquisition (30) d'une température (T) de ladite machine (1);
- des cinquièmes moyens d'acquisition d'une tension (Vb) de réseau électrique de bord du véhicule.

9. Machine électrique tournante (1) de véhicule automobile de type alternateur ou alterno-démarreur, **caractérisée en ce qu'**elle comporte un dispositif de commande (8) d'un module électronique de puissance (3) apte à fonctionner en redresseur synchrone intégré selon l'une quelconque des revendications 6 à 8 précédentes.

10. Machine électrique tournante (1) de véhicule automobile de type alternateur ou alterno-démarreur, selon la revendication 9, **caractérisée en ce qu'**elle comporte en outre un bloc de condensateurs de filtrage (31) intégré dans ledit module électronique de puissance (3).

## Patentansprüche

1. Verfahren zum Steuern eines Leistungselektronikmoduls (3), das als synchroner Gleichrichter arbeiten kann, der ein elektrisches Bordnetz (2) eines Kraftfahrzeugs ausgehend von einem von einer mehrphasigen drehenden elektrischen Maschine (1) gelieferten mehrphasigen Wechselstrom mit Gleichstrom (I) versorgt, das eine Steuerung des elektroniken Leistungsmoduls (3) durch eine erste Steuerung (16) eines synchronen Gleichrichtermodus (H,L)₁ oder durch eine zweite Steuerung (18) eines Vollwellenmodus (H,L)₂ mit einer Phasenverschiebung (Δϕ) bezüglich einer elektromotorischen Kraft (V) der Maschine (1) aufweist, abhängig vom Wert (Ω, V) mindestens eines Betriebsparameters der mehrphasigen drehenden elektrischen Maschine (1) unter der aktuellen Drehgeschwindigkeit (Ω) und der elektromotorischen Kraft (V) der Maschine (1), wobei die erste Steuerung (16) ausgewählt wird, wenn der Betriebsparameterwert (Ω, V) höher ist als ein vorbestimmter Wert (Ω₀), und die zweite Steuerung (18) im gegenteiligen Fall gewählt wird, **dadurch gekennzeichnet, dass** ein Öffnungswinkel (r) der zweiten Steuerung (18) von einem Sollwert (I₀) des Gleichstroms abhängt.

2. Steuerverfahren eines Leistungselektronikmoduls (3), das als synchroner Gleichrichter nach Anspruch 1 arbeiten kann, **dadurch gekennzeichnet, dass** ein Übergang zwischen der ersten und der zweiten Steuerung (16, 18) einen Hysteresebereich aufweist, der zwischen einem ersten vorbestimmten Betriebsparameterwert (Ω₁) höher als der vorbestimmte Wert (Ω₀) und einem zweiten vorbestimmten Betriebsparameterwert (Ω₂) niedriger als der vorbestimmte Wert (Ω₀) liegt.

3. Steuerverfahren eines Leistungselektronikmoduls (3), das als synchroner Gleichrichter nach einem der vorhergehenden Ansprüche 1 oder 2 arbeiten kann, **dadurch gekennzeichnet, dass** die Phasenverschiebung (Δϕ) variabel ist und abwechselnd oder in einer beliebigen Kombination von einer Stärke (I) des Gleichstroms, vom Sollwert des Gleichstroms (I₀), von der aktuellen Drehgeschwindigkeit (Ω), von einer Temperatur (T) der Maschine (1) und von einer elektrischen Bordspannung (Vb) abhängt.

4. Steuerverfahren eines Leistungselektronikmoduls (3), das als synchroner Gleichrichter nach einem der vorhergehenden Ansprüche 1 bis 3 arbeiten kann, **dadurch gekennzeichnet, dass** die Phasenverschiebung (Δϕ) und/oder der Öffnungswinkel (r) der zweiten Steuerung (18) so bestimmt werden, dass der Strom und/oder die Spannung im Bordnetz (2) begrenzt werden, wobei die Begrenzung in Amplitude und/oder Dauer erfolgt.

5. Steuerverfahren eines Leistungselektronikmoduls (3), das als synchroner Gleichrichter nach einem der vorhergehenden Ansprüche 1 bis 4 arbeiten kann, **dadurch gekennzeichnet, dass** der Öffnungswinkel (r) der zweiten Steuerung (18) vom Sollwert (I₀) des Gleichstroms und von mindestens einem elektrischen Merkmal (M) der Maschine abhängt.

6. Steuervorrichtung (8) eines Leistungselektronikmoduls (3), das als synchroner Gleichrichter arbeiten kann, wobei das Leistungselektronikmodul (3) eine Gleichrichterbrücke enthält, die Halbleiterschaltelemente (4) aufweist, welche mehrere Arme (H₁, L₁; H₂, L₂; H₃, L₃) bilden, die dazu bestimmt sind, mit den Statorwicklungen (7) eines Stators einer mehrphasigen drehenden elektrischen Maschine (1) verbunden zu werden und ein elektrisches Bordnetz (2) eines Kraftfahrzeugs mit Gleichstrom (I) versorgen, **dadurch gekennzeichnet, dass** sie enthält:
- erste Einrichtungen zur Erfassung einer Drehgeschwindigkeit (Ω) der Maschine (1) ;
- Einrichtungen zum Aufbau einer ersten Steuerung (16) eines synchronen Gleichrichtermodus (H,L)₁, wenn der Betriebsparameterwert (Ω) höher als ein vorbestimmter Wert (Ω₀) ist, und einer zweiten Steuerung (18) eines Vollwellenmodus (H,L)₂ im gegenteiligen Fall;
- Einrichtungen zur Steuerung der Halbleitersschaltelemente (4) durch die erste und zweite Steuerung (16, 18),
wobei die Steuervorrichtung (8) **dadurch gekennzeichnet ist, dass** sie für die Durchführung des Steuerverfahrens nach einem der vorhergehenden Ansprüche 1 bis 5 geeignet ist.

7. Steuervorrichtung (8) eines Leistungselektronikmoduls (3), das als synchroner Gleichrichter arbeiten kann, nach Anspruch 6, **dadurch gekennzeichnet, dass** die Aufbaueinrichtungen abwechselnd enthalten:
- mindestens einen Positionssensor (27) einer Winkelstellung (θ) eines Rotors (5) der Maschine;
- mindestens eine Messwindung (28) der elektromotorischen Kraft (V), die im Stator (7) angeordnet ist;
- Mess-/Schätzeinrichtungen (29) mindestens eines Phasenstroms (iₚ) der Maschine (1) oder dessen Vorzeichens.

8. Steuervorrichtung (8) eines Leistungselektronikmoduls (3), das als synchroner Gleichrichter arbeiten kann, nach Anspruch 6 oder 7, **dadurch gekennzeichnet, dass** die Aufbaueinrichtungen außerdem abwechselnd oder in einer beliebigen Kombination enthalten:
- zweite Erfassungseinrichtungen einer Stärke (I) des Gleichstroms;
- dritte Erfassungseinrichtungen eines Sollwerts (I₀) des Gleichstroms;
- vierte Erfassungseinrichtungen (30) einer Temperatur (T) der Maschine (1);
- fünfte Erfassungseinrichtungen einer Spannung (Vb) des elektrischen Bordnetzes des Fahrzeugs.

9. Drehende elektrische Maschine (1) eines Kraftfahrzeugs von der Art Generator oder Starter-Generator, **dadurch gekennzeichnet, dass** sie eine Steuervorrichtung (8) eines Leistungselektronikmoduls (3) aufweist, das als integrierter synchroner Gleichrichter nach einem der vorhergehenden Ansprüche 6 bis 8 arbeiten kann.

10. Drehende elektrische Maschine (1) eines Kraftfahrzeugs von der Art Generator oder Starter-Generator, nach Anspruch 9, **dadurch gekennzeichnet, dass** sie außerdem einen Block von Filterkondensatoren (31) aufweist, der in das elektronische Leistungselektronikmodul (3) integriert ist.

## Claims

1. Method for controlling an electronic power module (3) able to operate as a synchronous rectifier supplying an on-board electrical network (2) of a motor vehicle with DC current (I) from a polyphase AC current supplied by a polyphase rotating electrical machine (1), including controlling of the electronic power module (3) through a first synchronous rectification mode (H,L)₁ command (16) or through a second full-wave mode (H,L)₂ command (18) having a phase difference (Δϕ) with respect to an electromotive force (V) of said machine (1), depending on the value (Q, V) of at least one operating parameter of the polyphase rotating electrical machine (1) from among the current rotational speed (Ω) and the electromotive force (V) of said machine (1), said first command (16) being selected when said operating parameter value (Ω, V) is greater than a predetermined value (Ω₀) and said second command (18) being chosen in the opposite case, **characterized in that** an aperture angle (r) of said second command (18) depends on a setpoint value (I₀) of said DC current.

2. Method for controlling an electronic power module (3) able to operate as a synchronous rectifier according to Claim 1, **characterized in that** a transition between said first and second commands (16, 18) has a hysteresis range between a first predetermined operating parameter value (Ω₁) greater than said predetermined value (Ω₀) and a second predetermined operating parameter value (Ω₂) smaller than said predetermined value (Ω₀).

3. Method for controlling an electronic power module (3) able to operate as a synchronous rectifier according to either one of preceding Claims 1 and 2, **characterized in that** said phase difference (Δϕ) is variable and is dependent, alternatively or in any combination, on a magnitude (I) of said DC current, on the setpoint value of said DC current (I₀), on said current rotational speed (Ω), on a temperature (T) of said machine (1) and on an on-board electric voltage (Vb).

4. Method for controlling an electronic power module (3) able to operate as a synchronous rectifier according to any one of preceding Claims 1 to 3, **characterized in that** said phase difference (Δϕ) and/or said aperture angle (r) of said second command (18) are determined in such a way as to limit the current and/or the voltage on said on-board network (2), said limitation being performed in terms of amplitude and/or in terms of duration.

5. Method for controlling an electronic power module (3) able to operate as a synchronous rectifier according to any one of preceding Claims 1 to 4, **characterized in that** the aperture angle (r) of said second command (18) depends on the setpoint value (I₀) of said DC current and on at least one electrical characteristic (M) of said machine.

6. Device (8) for controlling an electronic power module (3) able to operate as a synchronous rectifier, said electronic power module (3) comprising a rectifier bridge including semiconductor switching elements (4) forming a plurality of arms (H₁, L₁; H₂, L₂; H₃, L₃) intended to be connected to the stator windings (7) of a stator of a polyphase rotating electrical machine (1) and supplying an on-board electrical network (2) of a motor vehicle with DC current (I), **characterized in that** it comprises:
- first means for acquiring a rotational speed (Q) of said machine (1);
- means for constructing a first synchronous rectification mode (H,L)₁ command (16) when said operating parameter value (Ω) is greater than a predetermined value (Ω₀), and a second full-wave mode (H,L)₂ command (18) in the opposite case;
- means for driving said semiconductor switching elements (4) by way of said first and second commands (16, 18), the control device (8) being **characterized in that** it is designed to implement the control method according to any one of preceding Claims 1 to 5.

7. Device (8) for controlling an electronic power module (3) able to operate as a synchronous rectifier according to Claim 6, **characterized in that** said construction means alternatively comprise:
- at least one position sensor (27) for sensing an angular position (θ) of a rotor (5) of said machine;
- at least one coil (28), arranged in said stator (7), for measuring said electromotive force (V);
- means (29) for measuring/estimating at least one phase current (iₚ) of said machine (1) or the sign thereof.

8. Device (8) for controlling an electronic power module (3) able to operate as a synchronous rectifier according to Claim 6 or 7, **characterized in that** said construction means furthermore comprise, alternatively or in any combination:
- second means for acquiring a magnitude (I) of said DC current;
- third means for acquiring a setpoint value (I₀) of said DC current;
- fourth means (30) for acquiring a temperature (T) of said machine (1);
- fifth means for acquiring a voltage (Vb) of an on-board electrical network of the vehicle.

9. Motor vehicle rotating electrical machine (1) of alternator or starter-alternator type, **characterized in that** it includes a device (8) for controlling an electronic power module (3) able to operate as an integrated synchronous rectifier according to any one of preceding Claims 6 to 8.

10. Motor vehicle rotating electrical machine (1) of alternator or starter-alternator type, according to Claim 9, **characterized in that** it furthermore includes a block of filtering capacitors (31) integrated into said electronic power module (3).
